# EUROPÄISCHE PATENTSCHRIFT

(11) **EP 0 945 404 B1**
(45) Veröffentlichungstag und Bekanntmachung des Hinweises auf die Patenterteilung: **13.11.2002**
(21) Anmeldenummer: 99105641.7
(22) Anmeldetag: 19.03.1999
(51) Int. Cl.: C02F 1/72

(54) **Perameisensäure und Peressigsäure enthaltendes wässriges Desinfektionsmittel, Verfahren zu dessen Herstellung und dessen Verwendung**
Aqueous disinfectant, comprising performic and peracetic acid, method of preparation and use
Agent désinfectant aqueux à base d'acide performique et d'acide peracétique,son procédé de préparation et son utilisation

(30) Priorität: 23.03.1998 DE 19812589
(43) Veröffentlichungstag der Anmeldung: 29.09.1999
(73) Patentinhaber: Degussa AG, 40474 Düsseldorf (DE)
(72) Erfinder: Huss, Michael, 65760 Eschborn (DE); Schneider, Roland, 63594 Hasselroth 2 (DE); Preuss, Andrea Dr., 63456 Hanau (DE); Fuchs, Rainer Dr., 63776 Mömbris (DE)

(56) Entgegenhaltungen:
- WO-A-94/21122

## Beschreibung

Die Erfindung richtet sich auf ein Perameisensäure und Peressigsäure enthaltendes wäßriges Desinfektionsmittel, ein Verfahren zu dessen Herstellung sowie dessen Verwendung zum Bekämpfen von Mikroorganismen, insbesondere in wäßrigen Systemen.

Zur Behandlung von wäßrigen Lösungen, insbesondere kommunalen Abwässern, Oberflächenwässern und industriellen Kreislauf- und Abwässern, die Mikroorganismen enthalten, welche aus hygienischen, betrieblichen oder Umweltgründen nicht unbehandelt abgelassen oder wiederverwendet werden können, sind wirksame Behandlungsverfahren nötig. Wirksame chemische Verfahren, die gleichzeitig umweltverträglich sind, basieren auf der Verwendung von Aktivsauerstoffverbindungen, wie insbesondere Wasserstoffperoxid, Peroxyessigsäure und Peroxyameisensäure, meistens bezeichnet als Peressigsäure und Perameisensäure, enthaltenden Desinfektionsmitteln. Unter dem Begriff "Desinfektionsmittel" wird ein Mittel verstanden, das zur Bekämpfung aller Arten von Mikroorganismen, wie Bakterien, Viren, Pilze und Algen, geeignet ist; zusätzlich eignet sich dieses Mittel zum Bekämpfen von Kleinlebewesen, wie Zooplankton.

Es ist bekannt, daß Wasserstoffperoxid ein mäßig wirkendes, mildes Desinfektionsmittel mit bakteriostatischen Eigenschaften ist. Während H₂O₂-Konzentrationen von 25 mg/l zwar das Wachstum einiger Bakterien hemmen, erfordert ein wirksames Absenken der Keimzahl selbst bei viel höherer H₂O₂-Konzentration viele Stunden oder eine zusätzliche UV-Bestrahlung. Derartige Maßnahmen sind im Falle der Desinfektion großer Wassermengen, etwa zur Behandlung von Wasser in Klärwerken und deren Abgängen, unzureichend und zudem unwirtschaftlich.

Peroxyessigsäure (PES) ist demgegenüber ein hochwirksames Wirkmittel, dessen Verwendung eine rasche Keimreduktion ermöglicht. Demgemäß wird Peressigsäure u.a. zur Sterilisierung in der Lebensmittelindustrie, Flaschen- und Krankenhaus-Desinfektion eingesetzt. Handelsübliche Peressigsäurelösungen mit einem Gehalt von 15 Gew.-% PES enthalten zusätzlich etwa 14 Gew.-% H₂O₂ und 28 Gew.-% Essigsäure. Die Verwendung derartiger PES-Lösungen bereitet wegen ihrer unangenehmen ätzenden und brandfördernden Eigenschaften Handhabungs-, Lager-, Werkstoff- und Transportprobleme. Ein weiterer Nachteil ist der hohe Essigsäuregehalt, der zu einem erhöhten CSB-Gehalt und zusätzlich zu einer drastischen Wiederverkeimung führen kann.

Die zuvor aufgezeigten Nachteile der PES-Lösungen lassen sich gemäß DE-OS 195 31 241.4 durch Verwendung einer niedrig konzentrierten Peressigsäurelösung mit einem Gehalt von 0,5 bis 2,5 Gew.-% PES, 40 bis 50 Gew.-% Wasserstoffperoxid und weniger als 2 Gew.-% Essigsäure vermeiden. Trotz anerkannt guter Wirkung einer solchen Peressigsäurelösung als Desinfektionsmittel besteht in einigen Anwendungen Bedarf an einem rascher und gegebenenfalls noch effizienter wirksamen Desinfektionsmittel auf der Basis von Aktivsauerstoffverbindungen, das die Nachteile der zuvor genannten PES-Lösungen mit einem PES-Gehalt von 15 Gew.-% oder darüber nicht aufweist.

Eine Alternative zu Desinfektionsmitteln auf der Basis von Peressigsäure und Wasserstoffperoxid enthaltenden Lösungen sind wäßrige Lösungen, welche Perameisensäure (PAS), PES, Wasserstoffperoxid und Ameisensäure enthalten. Gemäß J. Hyg. Epidem. Microbiol. Immunol. (1968) 12, 115 weist Perameisensäure eventuell bessere fungizide Eigenschaften auf als Peressigsäure, jedoch könnte der Effekt auch auf Ameisensäure zurückzuführen sein. Unter Verwendung einer derartigen Lösung lassen sich gemäß EP 0 231 632 A2 Mikroorganismen auf Oberflächen und gemäß WO 94/20424 in Wasserkreisläufen bei einer Einsatzkonzentration im Bereich von 1 - 1000 ppm, insbesondere 5 bis 100 ppm, Perameisensäure innerhalb etwa 0,5 bis 60 Minuten bekämpfen beziehungsweise abtöten.

Die PAS-Lösung gemäß WO 94/20424 und EP 0 231 632 wird durch Umsetzung von Wasserstoffperoxid mit Ameisensäure in situ erzeugt, wobei das Molverhältnis von H₂O₂ zu Ameisensäure im Bereich von 1 : 10 bis 10 : 1 liegt. Eingesetzt werden hochkonzentrierte Ameisensäure und 20 bis 50 gew.-%iges Wasserstoffperoxid. Nachteil einer solchen PAS-Lösung sind das nicht unbeträchtliche Explosionsrisiko und die hohe Korrosivität und damit Handhabungs- und Sicherheitsprobleme.

Aus der WO 95/24388 ist bekannt, daß die Umsetzung von Ameisensäure mit Wasserstoffperoxid bis zur Gleichgewichtseinstellung recht langsam erfolgt, die PAS-Bildung aber in Gegenwart eines Carbonsäureesters, zum Beispiel Ethylacetat, als Katalysator beschleunigt werden kann. Zusätzlich oder alternativ zu einem Carbonsäureester kann eine Verbindung mit einer -C(O)-O-Gruppe, wobei es sich aber nicht um eine Carbonsäuregruppe handelt, als Katalysator dienen; in diesem Dokument wird jedoch keine Anregung gegeben, worum es sich bei derartigen Verbindungen handeln könnte.

Ein Perameisensäure enthaltendes Desinfektionsmittel ist auch aus der WO 95/32625 bekannt: Gebildet wird die Perameisensäure durch Umsetzung eines Ameisensäureesters, wie Ethylformiat, mit einem Oxidationsmittel, insbesondere Wasserstoffperoxid. Vorteilhaft ist zwar die gegenüber dem System Ameisensäure/Wasserstoffperoxid geringere Korrosivität, nachteilig jedoch die ausweislich der Beispiele sehr niedrige Konzentration an Perameisensäure, wodurch erst nach längerer Einwirkungsdauer eine ausreichende Tötungsrate erreichbar ist. Zudem ist ein Ameisensäureester teurer als die Ameisensäure.

In der DE-A 39 29 335 wird ein Verfahren zur Desinfektion von Textilien in Waschstraßen gelehrt, wobei dem letzten Spülgang ein Peroxycarbonsäure enthaltendes Mittel zugesetzt wird. Bei dem Mittel handelt es sich insbesondere um eine Gleichgewichtsperoxycarbonsäurelösung mit einem Gehalt von 40 bis 60 Gew.-% Carbonsäure, 2 bis 5 Gew.-% Peroxycarbonsäure und 0,1 bis 3 Gew.-% Wasserstoffperoxid. Als Carbonsäure zur Herstellung des Mittels können neben Essigsäure auch Ameisensäure und Propionsäure sowie Gemische solcher Säuren eingesetzt werden; Details zu zwei Carbonsäuren und demgemäß die entsprechenden Peroxycarbonsäuren enthaltenden Mitteln lassen sich dem Dokument nicht entnehmen.

Obgleich Desinfektionsmittel auf der Basis von Perameisensäure in einigen Fällen eine höhere mikrobiozide Wirkung zeigen können als solche auf der Basis von Peressigsäure, ist die Herstellung und Handhabung von Perameisensäure in höherer Konzentration enthaltender Lösungen problematisch. Aufgabe der Erfindung ist demgemäß, ein Perameisensäure, Peressigsäure und Wasserstoffperoxid enthaltendes Desinfektionsmittel aufzuzeigen, das leicht und gefahrlos in situ hergestellt und nach kurzer Reaktionszeit zu Desinfektionszwecken verwendet werden kann. Zudem sollte das Desinfektionsmittel nach kurzer Einwirkungsdauer zu einer hohen Tötungsrate der Mikroorganismen in wäßrigen Systemen führen.

Gefunden wurde ein Verfahren zur Herstellung eines Peressigsäure und Perameisensäure enthaltenden wäßrigen Desinfektionsmittels durch Zugabe einer Quelle für Ameisensäure zu einer Wasserstoffperoxid enthaltenden wäßrigen Phase, das dadurch gekennzeichnet ist, daß man als Quelle für Ameisensäure Ameisensäure oder ein wasserlösliches Salz der Ameisensäure in einer Menge von 0,1 bis 1,0 Mol Ameisensäure oder 0,1 bis 1,0 Äquivalent Formiat pro kg des herzustellenden Desinfektionsmittels und als Wasserstoffperoxid enthaltende wäßrige Phase eine Gleichgewichtsperessigsäurelösung mit einem Gehalt von 20 bis 60 Gew.-% Wasserstoffperoxid, 0,5 bis 6 Gew.-% Peressigsäure, weniger als 10 Gew.-%, insbesondere weniger als 2 Gew.-% Essigsäure und bis zu 3 Gew.-% einer Mineralsäure verwendet und das Gemisch vor der Verwendung mindestens 1 Minute bis 5 Stunden stehen läßt.

Vorzugsweise wird als Wasserstoffperoxid und Peressigsäure enthaltende wäßrige Phase eine Gleichgewichtsperessigsäure eingesetzt, die gleichgewichtsbedingt auch Essigsäure enthält. Zweckmäßigerweise enthält die Gleichgewichtsperessigsäure zusätzlich auch einen aus ihrer Herstellung stammenden Mineralsäure-Katalysator, wie insbesondere einen solchen aus der Reihe Schwefelsäure, Phosphorsäure (H₃PO₄), Pyrophosphorsäure (H₄P₂O₇) und Polyphosphorsäure (H_{n+z}PₙO₃ₙ₊₁), wobei n eine ganze Zahl ≥ 3 ist. Zweckmäßigerweise enthält die Peressigsäurelösung 0,1 bis 5 Gew.-%, insbesondere 0,5 bis 3 Gew.-% Mineralsäure.

Zweckmäßigerweise liegt der Gehalt an Peressigsäure (PES) in der einzusetzenden Gleichgewichtsperessigsäure im Bereich von 0,5 bis 15 Gew.-%, insbesondere 0,5 bis 6 Gew.-% und gemäß einer weiteren bevorzugten Ausführungsform im Bereich von etwa 1 bis 3 Gew.-%. Derartige Gleichgewichtsperessigsäurelösungen weisen im allgemeinen einen Gehalt an Wasserstoffperoxid im Bereich von etwa 20 bis 60 Gew.-%, insbesondere 20 bis 50 Gew.-%, auf; bevorzugte Lösungen mit 1 bis 3 Gew.-% Peressigsäure enthalten meist 30 bis 50 Gew.-% Wasserstoffperoxid. Der Essigsäuregehalt bevorzugter Gleichgewichtsperessigsäurelösungen sollte in der Regel unter 10 Gew.-% liegen. Lösungen mit 0,5 bis 3 Gew.-% PES enthalten vorzugsweise weniger als 2 Gew.-% und besonders bevorzugt weniger als 1 Gew.-% Essigsäure. Ein möglichst niedriger Essigsäuregehalt mindert die Gefahr einer raschen Wiederverkeimung nach mikrobiozider Behandlung eines wäßrigen Systems mit einem erfindungsgemäß hergestellten Desinfektionsmittel. Demgemäß wird in einer bevorzugten Ausführungsform als wäßrige Phase eine Gleichgewichtsperessigsäure mit einem Gehalt von 30 bis 50 Gew.-% H₂O₂, 1 bis 3 Gew.-% Peressigsäure (PES), weniger als 2 Gew.-%, insbesondere weniger als 1 Gew.-% Essigsäure, und 0,5 bis 3 Gew.-% Mineralsäure eingesetzt.

Als Quelle für Ameisensäure kann entweder Ameisensäure, ein niederer Ameisensäureester, wie Methyl-, Ethyl oder Propylformiat, oder ein wasserlösliches Salz von Ameisensäure eingesetzt werden. Das Salz kann in festem Zustand oder in Form einer wäßrigen Lösung der H₂O₂ und PES enthaltenden wäßrigen Phase zugesetzt werden. Wasserlösliche Salze sind Alkalimetallformiate, insbesondere Natriumformiat, und Erdalkalimetallformiate, insbesondere Calciumformiat. Einsetzbar sind auch Ammoniumformiat und quaternäre Ammoniumformiate, wobei das quaternäre Ammoniumion, etwa (C₁₀-C₁₈)-Alkyltrimethylammonium, selbst mikrobiozide Eigenschaften aufweisen kann. Der besondere Vorteil der Verwendung eines Alkalimetall-Formiats liegt in der sicheren und leichten Handhabbarkeit, der Geruchsfreiheit des Salzes sowie in der Minderung der Korrosivität des herzustellenden Desinfektionsmittels.

Die Einsatzmenge an Ameisensäure- oder Salz derselben liegt üblicherweise im Bereich von 0,1 bis 1 Mol Ameisensäure oder 0,1 bis 1 Äquivalent Formiat pro kg des herzustellenden Desinfektionsmittels. Sofern die eingesetzte Peressigsäurelösung eine ausreichend große Menge Mineralsäure enthält, kann die Einsatzmenge auch bei der Verwendung von Formiaten weiter erhöht werden. Beim Einsatz eines Ameisensäuresalzes soll die Einsatzmenge niedriger sein als zur Neutralisation der anwesenden Mineralsäure erforderlich ist. Bevorzugt werden pro mÄquivalent anwesender Mineralsäure 0,1 bis 0,8 mÄquivalente Alkalimetallformiat, insbesondere Natriumformiat, eingesetzt.

Zur Herstellung eines bevorzugten Desinfektionsmittels wird eine der zuvor genannten bevorzugten Gleichgewichtsperessigsäurelösungen mit einem PES-Gehalt von 0,5 bis 6 Gew.-%, einem H₂O₂-Gehalt von 20 bis 50 Gew.-% und einem Essigsäuregehalt von weniger als 10 Gew.-% mit 0,2 bis 1 Mol Ameisensäure.oder 0,2 bis 1 Äquivalent Formiat als Quelle für Ameisensäure in Kontakt gebracht. Nach kurzzeitigem Stehen oder Rühren, im allgemeinen mindestens 1 Minute bis 5 Stunden, kann die nun Perameisensäure (PAS), Peressigsäure (PES) und Wasserstoffperoxid enthaltende Lösung als Desinfektionsmittel verwendet werden. Das Erreichen des Gleichgewichts ist vielfach nicht erforderlich, weil nicht-umgesetzte Ameisensäure selbst eine mikrobiozide Aktivität aufweist. Die PAS enthaltende Lösung soll vorzugsweise innerhalb etwa 12 Stunden verwendet werden, da der PAS-Gehalt nach Erreichen eines maximalen Werts wieder abnimmt und der Persäuregehalt im wesentlichen wieder auf Werte der ursprünglich eingesetzten Lösung absinkt.

Ein bevorzugtes, nach dem erfindungsgemäßen Verfahren erhältliches wäßriges Desinfektionsmittel enthält pro kg: 0,1 bis 3 Gew.-% Perameisensäure, 0,1 bis 5 Gew.-% Peressigsäure, Ameisensäure und Essigsäure in einer Gesamtmenge von weniger als 10 Gew.-% und 20 bis 50 Gew.-% Wasserstoffperoxid.

Zusätzlich kann das Desinfektionsmittel übliche Zusatzstoffe, darunter Aktivsauerstoffstabilisatoren, wie Komplexbildner aus der Reihe der Phosphonsäureverbindungen, Zinnverbindungen und Pyridincarbonsäuren oder Salzen davon oder Radikalfänger enthalten, ferner Korrosionsinhibitoren, Härtestabilisatoren, Belagverhinderer und Tenside, insbesondere anionische und nichtionische Tenside. Desweiteren können zusätzlich Mikrobiozide aus anderen Stoffklassen als Aktivsauerstoffverbindungen zugegen sein.

Die erfindungsgemäß erhältlichen Desinfektionsmittel zeichnen sich durch ihre hohe Wirksamkeit beim Bekämpfen von Mikroorganismen aus der Reihe der Bakterien, Viren, Pilze und Algen aus. Bereits innerhalb von 30 Sekunden nach Zugabe des Desinfektionsmittels zu einem wäßrigen System sinkt die Keimzahl [KBE/ml] um 3 bis 4 Zehnerpotenzen. Eine derart hohe und insbesondere rasche Tötungsrate ist beim Einsatz eines Desinfektionsmittels im Schwimmbadbereich aufgrund gesetzlicher Auflagen erforderlich. Offensichtlich wirkt eine erfindungsgemäße PAS- und PES-enthaltende Desinfektionsmittellösung, bezogen auf den gesamten Percarbonsäuregehalt, besser als eine bisher übliche Lösung, die als Percarbonsäure nur PAS enthält. Wie aus dem Beispiel B2 und den Vergleichsbeispielen VB2 und VB0 hervorgeht, wurde mit der erfindungsgemäßen Lösung eine raschere und vollständigere Keimzahlreduzierung erzielt als mit einer vorbekannten, als Percarbonsäure nur Perameisensäure enthaltenden Lösung. Dies war überraschend, weil der gesamte Percarbonsäuregehalt im Beispiel 2 nur etwa 40 % desjenigen des Vergleichsbeispiels 2 betrug. Zwar enthielt das Beispiel B2 mehr Wasserstoffperoxid als das Vergleichsbeispiel VB2, jedoch ist bekannt, daß Wasserstoffperoxid zwar bakteriostatisch, aber kaum bakterizid wirkt.

Die Einsatzmenge des Desinfektionsmittels richtet sich nach dem vorgesehenen Zweck. Üblicherweise werden 1 bis 1000 mg, insbesondere 1 bis 100 mg und besonders bevorzugt 5 bis 20 mg des Desinfektionsmittels pro 1 des zu behandelnden Wassers eingesetzt.

Das erfindungsgemäße Verfahren läßt sich in unterschiedlichen Bereichen anwenden. Beispielhaft werden genannt: Kreislaufwasser und Abwasser aus der Lebensmittel-, Brau- und Milchindustrie; Kreislauf- und Abwasser chemischer Verfahren, in welchen es ohne eine Desinfektion und/oder Hemmung des Keimwachstums zu Problemen kommen kann - etwa Schleim- und Geruchsbildung; Wasser und Schlämme aus der Petrochemie sowie kommunaler Klärwerke; Schwimmbadwasser. Eine weitere Anwendung des erfindungsgemäßen Verfahrens liegt im Bereich der Bodensanierung: Durch Zugabe des Desinfektionsmittels in das Wasser eines Infiltrationsbrunnens werden Mikroorganismen in unmittelbarer Nähe desselben reduziert; damit wird die biologische Zersetzung des als Sauerstoffträger anwesenden Wasserstoffperoxids verringert und eine größere Reichweite von unzersetztem Wasserstoffperoxid im Boden erreicht.

Wesentliche Vorteile des erfindungsgemäßen Verfahrens sind die sichere Handhabbarkeit und rasche Verfügbarkeit der Perameisensäure aus leicht transport- und lagerfähigen Stoffen. Natriumformiat als Quelle für Ameisensäure ist im Vergleich zu Ameisensäuren leichter transportfähig, lagerbar, geruchsfrei und nicht hautkorrosiv.

Die Desinfektionswirkung läßt sich über die Einsatzmenge der Quelle für Ameisensäure und Zusammensetzung der einzusetzenden Peressigsäurelösung leicht steuern. Vorteilhaft ist ferner die rasche Wirkung und die hohe Keimtötungsrate. Lösungen mit sehr niedrigem Essigsäuregehalt zeichnen sich durch verzögerte Wiederverkeimung aus. Das erfindungsgemäße Desinfektionsmittel eignet sich besonders dort, wo eine zu hohe Azidität unerwünscht ist. Die Konzentration der nach der Herstellung des erfindungsgemäßen Mittels gebildeten Perameisensäure sinkt nach einigen Stunden wieder ab, während die Wirkung der im Mittel enthaltenen Peressigsäure weitgehend erhalten bleibt. Das Mittel eignet sich daher besonders dort, wo zunächst eine verstärkte Wirkung, gleichzeitig aber eine längeranhaltende mikrobiozide Wirkung gefordert wird.

### Beispiel 1 und Vergleichsbeispiel 1

Ein erfindungsgemäßes Desinfektionsmittel wurde hergestellt durch Zugabe von 20 g Ameisensäure (AS) zu 980 g einer Gleichsgewichtsperessigsäure, welche 2 Gew.-% Peressigsäure (PES), 1 Gew.-% Essigsäure (ES) und 48 Gew.-% Wasserstoffperoxid sowie 2 Gew.-% H₂SO₄ enthielt.

Nach einer Standzeit von nur 2 Stunden wurde diese Lösung als Desinfektionsmittel im Vergleich zu der eingesetzten Gleichgewichtsperessigsäure zur Behandlung von Schwimmbadwasser eingesetzt; Einsatzmenge jeweils 10 mg Desinfektionsmittel pro 1 Wasser.

Einem Schwimmbadwasser wurden unter standardisierten Bedingungen Reinkulturen der zu testenden Keimsuspension zugegeben und auf eine Konzentration von 10⁷ bis 10⁸ KBE/ml eingestellt. Nach Zugabe des Desinfektionsmittels wurden nach einer Einwirkungzeit von 10, 20 und 30 Sekunden Proben entnommen und in diesen nach Inaktivierung des Desinfektionsmittels die verbleibende Konzentration der Testkeime bestimmt und daraus die Desinfektionskapazität (KRₜ) ermittelt. KRₜ = log KBE_{(KO)} - log KBE_{(D)}, wobei KBE_{(KO)} die Anzahl KBE pro ml ohne Einwirkung eines Desinfektionsmittels und KBE_{(D)} jene nach Einwirkung ist.

| | Beispiel 1 | Vergleichsbeispiel 1 |
|---|---|---|
| Keimtötungsgeschwindigkeit | 22 - 30 Sekunden | größer 60 Sekunden |
| Pseudomonas aernginosa ATCI 15442 | 4 log-Stufen | 4 log-Stufen |
| Escherichia coli ATCI 11229 | 3 log-Stufen | 3 log-Stufen |

Die nach DIN 19643 als auch der Empfehlung des BGA (Bundesgesundheitsamt (DE)) geforderte Desinfektionskapazität wird damit erreicht. Ein weiterer Vorteil ist, daß die Verwendung von PES allein zu einem zu hohen CSB führen und die Keimtötungsgeschwindigkeit nicht erreichen würde. Die PAS allein dagegen würde die Anforderungen an die Standzeit nicht erreichen. Erst die Kombination der beiden stellt sicher, daß es möglich ist, allen Anforderungen näher zu kommen.

### Beispiel 2 (B2) und Vergleichsbeispiel 2 (VB2)

Untersucht wurde die biologische Wirksamkeit einer erfindungsgemäßen Peressigsäure und Perameisensäure enthaltenden Desinfektionsmittellösung (B2) im Vergleich zu einer als Percarbonsäure ausschließlich Perameisensäure enthaltenden Lösung (VB2). Die Zusammensetzung der Lösungen folgt aus der Tabelle:

| | B 2 | VB 2 |
|---|---|---|
| Herstellung | Mischen einer 2 Gew.-% PES, 48 Gew.-% H₂O₂, 1 Gew. -% ES und 2 Gew.-% H₂SO₄ enthaltenden Peressigsäurelösung (= VB 0) 3 Gew.-% HCOOH (AS) ; 4 h stehen lassen | Mischen von 68 g einer 35 gew.-%igen H₂O₂-Lösung mit 32 g Ameisensäure (AS) ; 4 h stehen lassen |

| Zusammensetzung (in Gew.-%) | | |
|---|---|---|
| PAS | 1,55 | 8,0 |
| PES | 1,90 | - |
| AS | 1,85 | 27,1 |
| ES | 1,0 | - |
| H₂O₂ | 45,1 | 19,6 |

Untersucht wurde der Keimzahlverlauf von E. Cols K12 bei einer Einsatzmenge von 50 ppm der Lösung gemäß B2, 50 ppm der Lösung gemäß VB2 und 50 ppm der zur Herstellung der Lösung gemäß B2 eingesetzten Peressigsäurelösung (=VB0). Die Wirkung wurde mittels eines Bioluminiszenz-Schnelltests ermittelt.

Der Verlauf der Werte für die Luminiszenz (RLU-Wert) - Maß für die Keimzahlabnahme - folgt aus der Tabelle:

| RLU nach Minuten | B 2 | VB 2 | VB 0 |
|---|---|---|---|
| 5 | 320 | 270 | 950 |
| 10 | 40 | 160 | 560 |
| 15 | 25 | 150 | |
| 30 | 0 | 50 | 110 |

Der RLU-Wert sank unter Einsatz des erfindungsgemäßen Desinfektionsmittels in 30 Minuten auf 0 ab (=B2), während unter Einsatz der vorbekannten Perameisensäurelösung (=VB2) ein Endwert von 50 und unter Einsatz der zur Herstellung von B2 eingesetzten Peressigsäurelösung (=VB0) ein Endwert von 110 erreicht wurde.

### Beispiele 3 und 4

Untersucht wurden die Bildung von Perameisensäure nach Zugabe von 1 Gew.-% Ameisensäure (=B3) beziehungsweise 1 Gew.-% Natriumformiat (Nafo) (=B4) zu einer Gleichgewichtsperessigsäure (G-PES 2) mit einem Gehalt von 2 Gew.-% PES, 1 Gew.-% ES, 2 Gew.-% H₂SO₄ und 48 Gew.-% H₂O₂, ferner die Stabilität des aus Percarbonsäuren resultierenden Aktivsauerstoffgehalts (% AO).

Die Tabelle zeigt die Ergebnisse - % AO aus Persäuren in Zeitabhängigkeit.

**Tabelle**

| | zum Vergleich | B 3 | B 4 |
|---|---|---|---|
| Zeit (h) | G-PES 2 | G-PES 2 + 1 % AS | G-PES 2 + 1 % Nafo |
| 0 | 0,42 | | |
| 1 | | | 0,45 |
| 3 | | 0,52 | |
| 4 | | | 0,48 |
| 5 | | 0,62 | |
| 6 | | | 0,50 |
| 7 | | | 0,47 |
| 65 | 0,42 | 0,50 | 0,43 |

Durch Zugabe von Ameisensäure oder Natriumformiat steigt der Percarbonsäuregehalt an. Die Bildungsgeschwindigkeit unter Verwendung von Natriumformiat ist geringer, da hierdurch ein Teil der katalytisch wirksamen Schwefelsäure neutralisiert wird; aus dem gleichen Grund ist die Stabilität geringer. Eine verbesserte Pufferung wird erreicht.

### Beispiele 5 und 6

Analog den Beispielen 3 und 4 wurde eine 5 gew.-%ige Gleichgewichtsperessigsäurelösung (G-PES 5) (5 % PES, 7 % ES, 23 % H₂O₂ und 2 % H₂SO₄) mit 1 Gew.-% Ameisensäure (AS) (bezogen auf die G-PES) beziehungsweise 1 Gew.-% Natriumformiat (Nafo) versetzt. Die Tabelle zeigt die Bildung und AO-Stabilität in Zeitabhängigkeit.

**Tabelle:**

| | zum Vergleich | B 5 | B 6 |
|---|---|---|---|
| Zeit (h) | G-PES 5 | G-PES 5 + 1 % AS | G-PES 5 + 1 % Nafo |
| 0 | 1,05 | | |
| 4 | | 1,15 | |
| 6 | | 1,13 | 1,13 |
| 8 | | | 1,05 |
| 65 | 1,05 | 1,07 | 1,03 |

## Patentansprüche

1. Verfahren zur Herstellung eines Peressigsäure und Perameisensäure enthaltenden wäßrigen Desinfektionsmittels durch Zugabe einer Quelle für Ameisensäure zu einer Wasserstoffperoxid enthaltenden wäßrigen Phase,
**dadurch gekennzeichnet,**
**daß** man als Quelle für Ameisensäure Ameisensäure oder ein wasserlösliches Salz der Ameisensäure in einer Menge von 0,1 bis 1,0 Mol Ameisensäure oder 0,1 bis 1,0 Äquivalent Formiat pro kg des herzustellenden Desinfektionsmittels und als Wasserstoffperoxid enthaltende wäßrige Phase eine Gleichgewichtsperessigsäurelösung mit einem Gehalt von 20 bis 60 Gew.-% Wasserstoffperoxid, 0,5 bis 6 Gew.-% Peressigsäure, weniger als 10 Gew.-%, insbesondere weniger als 2 Gew.-% Essigsäure und bis zu 3 Gew.-% einer Mineralsäure verwendet und das Gemisch vor der Verwendung mindestens 1 Minute bis 5 Stunden stehen läßt.

2. Verfahren nach Anspruch 1,
**dadurch gekennzeichnet,**
**daß** man als Quelle für Ameisensäure ein Alkalimetallformiat, insbesondere Natriumformiat, verwendet und pro mÄquivalent anwesender Mineralsäure 0,1 bis 0,8 mÄquivalent Formiat zugibt.

3. Verfahren nach Anspruch 1 oder 2,
**dadurch gekennzeichnet,**
**daß** man eine Gleichgewichtsperessigsäure verwendet, deren Mineralsäure ausgewählt ist aus der Reihe Schwefelsäure, Phosphorsäure, Pyrophosphorsäure und Polyphosphorsäure.

4. Wäßriges Desinfektionsmittel,
**dadurch gekennzeichnet,**
**daß** es 0,1 bis 3 Gew.-% Perameisensäure, 0,1 bis 5 Gew.-% Peressigsäure, Ameisensäure und Essigsäure in einer Gesamtmenge von bis zu 10 Gew.-%, vorzugsweise weniger als 2 Gew.-%, Wasserstoffperoxid in einer Menge von 20 bis 50 Gew.-% und eine Mineralsäure in einer Menge von bis zu 3 Gew.-% enthält.

5. Wäßriges Desinfektionsmittel nach Anspruch 4,
**dadurch gekennzeichnet,**
**daß** es bis zu 1 Gew.-% Natriumionen aus bei der Herstellung eingesetztem Natriumformiat enthält.

6. Verwendung des wäßrigen Desinfektionsmittels gemäß Anspruch 4 oder 5 zum Bekämpfen von Mikroorganismen aus der Reihe der Bakterien, Viren, Pilze und Algen in wäßrigen Systemen und auf Oberflächen.

7. Verwendung nach Anspruch 6,
**dadurch gekennzeichnet,**
**daß** man das Mittel zur Desinfektion von Schwimmbadwasser verwendet.

## Claims

1. Method for the preparation of an aqueous disinfectant containing peracetic acid and performic acid, by adding a source of formic acid to an aqueous phase containing hydrogen peroxide,
**characterised in that**
formic acid or a water-soluble salt of formic acid, in a quantity of 0.1 to 1.0 mol formic acid or 0.1 to 1.0 equivalents of formate per kg of the disinfectant to be prepared, is used as the source of formic acid and an equilibrium solution of peracetic acid containing 20 to 60 wt.% hydrogen peroxide, 0.5 to 6 wt.% peracetic acid, less than 10 wt.%, in particular less than 2 wt.%, acetic acid and up to 3 wt.% of a mineral acid is used as the aqueous phase containing hydrogen peroxide and the mixture is allowed to stand for at least 1 minute up to 5 hours prior to use.

2. Method according to claim 1,
**characterised in that**
an alkali-metal formate, in particular sodium formate, is used as the source of formic acid and 0.1 to 0.8 mequivalents of formate is added per mequivalent of mineral acid present.

3. Method according to claim 1 or 2,
**characterised in that**
an equilibrium peracetic acid wherein the mineral acid is selected from among sulfuric acid, phosphoric acid, pyrophosphoric acid and polyphosphoric acid is used.

4. Aqueous disinfectant,
**characterised in that**
it contains 0.1 to 3 wt.% performic acid, 0.1 to 5 wt.% peracetic acid, formic acid and acetic acid in a total quantity of up to 10 wt.%, preferably less than 2 wt.%, hydrogen peroxide in a quantity of 20 to 50 wt.% and a mineral acid in a quantity of up to 3 wt.%.

5. Aqueous disinfectant according to claim 4,
**characterised in that**
it contains up to 1 wt.% sodium ions from sodium formate used during the preparation.

6. Use of the aqueous disinfectant according to claim 4 or 5 for the control of microorganisms from among the bacteria, viruses, fungi and algae in aqueous systems and on surfaces.

7. Use according to claim 6,
**characterised in that**
the agent is used for the disinfection of water in swimming baths.

## Revendications

1. Procédé de production d'un agent désinfectant aqueux contenant de l'acide peracétique et de l'acide performique par addition d'une source d'acide formique à une phase aqueuse contenant du peroxyde d'hydrogène,
**caractérisé en ce qu'**
on utilise comme source d'acide formique l'acide formique ou un sel soluble dans l'eau de l'acide formique en une quantité de 0,1 à 1,0 mole d'acide formique ou de 0,1 à 1,0 équivalent de formiate par kg du désinfectant à préparer, et comme phase aqueuse contenant du peroxyde d'hydrogène, une solution d'acide peracétique à l'équilibre ayant une teneur de 20 à 60 % en poids de peroxyde d'hydrogène, 0,5 à 6 % en poids d'acide peracétique, moins de 10 % en poids, en particulier moins de 2 % en poids, d'acide acétique, et jusqu'à 3 % en poids d'un acide minéral, et on laisse reposer le mélange avant utilisation pendant 1 minute à 5 heures.

2. Procédé selon la revendication 1,
**caractérisé en ce qu'**
on utilise comme source d'acide formique un formiate de métal alcalin, en particulier le formiate de sodium, et **en ce qu'**on ajoute par milliéquivalent (mEq) d'acide minéral présent, de 0,1 à 0,8 mEq de formiate.

3. Procédé selon la revendication 1 ou 2,
**caractérisé en ce qu'**
on utilise un acide peracétique à l'équilibre dont l'acide minéral est choisi dans la série constituée par l'acide sulfurique, l'acide phosphorique, l'acide pyrophosphorique et l'acide polyphosphorique.

4. Désinfectant aqueux
**caractérisé en ce qu'**
il contient de 0,1 à 3 % en poids d'acide performique, de 0,1 à 5 % en poids d'acide peracétique, de l'acide formique et de l'acide acétique en une quantité totale allant jusqu'à 10 % en poids, de préférence inférieure à 2 % en poids, du peroxyde d'hydrogène en une quantité allant de 20 à 50 % en poids et un acide minéral en une quantité allant jusqu'à 3 % en poids.

5. Désinfectant aqueux selon la revendication 4,
**caractérisé en ce qu'**
il contient jusqu'à 1 % en poids d'ions sodium provenant du formiate de sodium utilisé dans la préparation.

6. Utilisation du désinfectant aqueux selon la revendication 4 ou 5 pour la lutte contre les microorganismes de la série des bactéries, des virus, des champignons et des algues dans les systèmes aqueux et sur les surfaces.

7. Utilisation selon la revendication 6,
**caractérisé en ce qu'**
on utilise l'agent pour la désinfection de l'eau des piscines.
